# EUROPEAN PATENT APPLICATION

(11) **EP 4 748 628 A1**
(43) Date of publication of application: **27.05.2026**
(21) Application number: 25215627.8
(22) Date of filing: 13.11.2025
(51) Int. Cl.: B60L 53/14, B60L 53/16, B60L 53/18, B60L 53/30, B60L 53/62, B60L 53/63, H02J 7/90

(54) **ELECTRIC VEHICLE CHARGING SYSTEM**

(30) Priority: 20.11.2024 CN 202411666445; 12.02.2025 GB 202502064
(71) Applicant: Luceco UK Limited, Telford Shropshire TF3 3BD (GB)
(72) Inventor: Stuart-Walker, Robert, Telford, TF3 3BD (GB); Zheng, Caokai, Telford, TF3 3BD (GB)
(74) Representative: Marks & Clerk LLP

(57) **Abstract**

An electric vehicle (EV) charging system comprising a control module and a socket module is disclosed. The control module comprises a first electrical power inlet configured to receive an electrical power supply from an external power source; a first electrical power outlet configured to output an electrical power supply to the socket module; a control signal generator configured to generate a digital control signal; and a first communications interface configured to transmit the digital control signal to the socket module. The socket module comprises a second electrical power inlet configured to receive electrical power from the first electrical power outlet of the control module; a second electrical power outlet configured to output electrical power to an electric vehicle (EV); a second communications interface configured to receive the digital control signal from the first communications interface of the control module; a signal converter configured to convert the received digital control signal to a PWM control signal; and a third communications interface configured to output the PWM control signal to the EV.

## Description

### Technical Field

The present invention relates to an electric vehicle (EV) charging system.

### Background

In recent years EVs have become ever more popular. With this proliferation in EVs, providing EV charging infrastructure has become ever more important. Electric vehicle supply equipment (EVSE) or charging stations can be provided at residential and/or commercial premises.

A mode 3 EV supply equipment (EVSE) delivers home charging at a fast rate for EVs. The function and control of these products are in accordance with various technical standards such as the IEC 61851 standard.

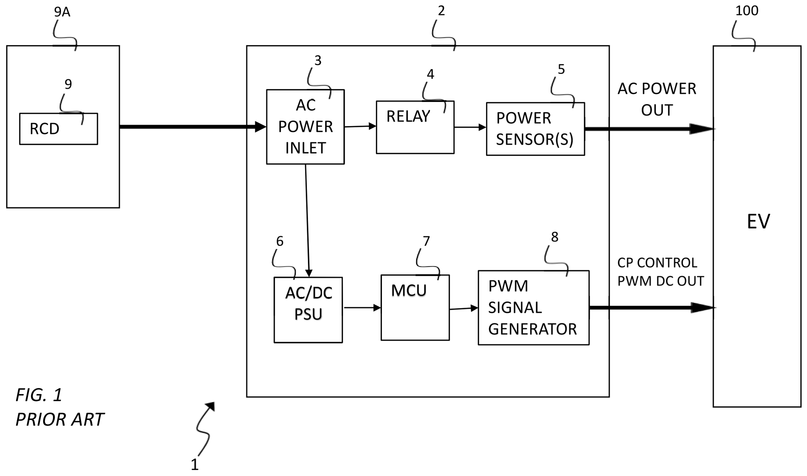

Figure 1 is a schematic block diagram illustrating components of a typical mode 3 EVSE 1 known in the art. Such an EVSE typically comprises a housing 2 containing an alternating current (AC) power inlet 3, one or more relays 4 and a power sensor 5. The housing 2 also contains control circuitry comprising an AC/DC power supply unit (PSU) 6 for converting part of the received AC power to direct current (DC) power, a microcontroller unit (MCU) 7 and pulse width modulated (PWM) control signal generator 8. The PWM control signal generator 8 is configured to generate a PWM control signal which may be based on measurable parameters of the EVSE. Because the PWM control signal is susceptible to external noise and voltage drop the components of the EVSE 1 are contained within a single housing 2 located close (typically 10 metres or less) to a socket of the EVSE 1. Upstream protection may be provided in the form of a residual-current device (RCD) 9 fitted in a separate enclosure 9A from the EVSE enclosure. The one or more relays 4 and power sensor 5 are required to withstand high temperatures. The housing 2 therefore needs to be sufficiently large to support the large amount of heat generated by the one or more relays 4 and power sensor 5.

In such EVSEs, the one or more relays 4 control the supply of power to the EV, using the power sensor(s) 5 and a low voltage Pulse Width Modulated (PWM) (typically DC 6-12V) control signal. The voltage has a limited tolerance to control the power supply from the EVSE to an EV 100. The PWM control signal is very sensitive to external noise and voltage drop. With these existing EVSEs, there is therefore a requirement that the PWM control signal be generated close to the power outlet of the EVSE to reduce interference with the PWM control signal. The housing 2 therefore needs to be provided close to the socket outlet to the EV 100.

The requirement of providing a single housing that is large enough to accommodate high-temperature resistant components close to the socket of the EVSE is a significant drawback.

### Summary

In accordance with a first aspect of the invention, there is provided an electric vehicle charging system comprising a control module and a socket module, the control module comprising: a first electrical power inlet configured to receive an electrical power supply from an external power source; a first electrical power outlet configured to output an electrical power supply to the socket module; a control signal generator configured to generate a digital control signal; and a first communications interface configured to transmit the digital control signal to the socket module, the socket module comprising: a second electrical power inlet configured to receive electrical power from the first electrical power outlet of the control module; a second electrical power outlet configured to output electrical power to an electric vehicle (EV); a second communications interface configured to receive the digital control signal from the first communications interface of the control module; a signal converter configured to convert the received digital control signal to a PWM control signal; and a third communications interface configured to output the PWM control signal to the EV.

The third communications interface may be configured to receive an analog feedback signal from the EV; the signal converter may be configured to convert the received analog feedback signal to a digital feedback signal; the second communications interface may be configured to send the digital feedback signal to the first communications interface of the control module; and the first communications interface of the control module may be configured to receive the digital feedback signal from the second communications interface.

The first communications interface and the second communications interface may be connected via a wired connection.

The wired connection may be configured to support digital signal transmission and DC electrical power transmission.

The control module further may comprise a residual current monitoring (RCM) module.

The AC electrical power outlet of the control module may comprise an electrical relay.

The control module may comprise an AC electrical power supply monitoring unit configured to monitor at least one parameter of the AC electrical power supply being received from the mains supply and/or being output to the socket module, wherein the control signal generator may be configured to generate the digital control signal based on the at least one parameter of the AC electrical power supply.

The control module may comprise a temperature monitoring unit configured to determine a temperature of the EV charging system, wherein the control signal generator may be configured to generate the digital control signal based on the determined temperature.

The control signal generator may be configured to generate the digital control signal based on charging status information received from the EV.

The control module may be contained in a first enclosure and the charging module may be contained in a second enclosure.

The first enclosure may contain a residual current device.

In accordance with a second aspect of the invention, there is provided a control module of an electric vehicle charging system, the control module comprising: an electrical power inlet configured to receive an electrical power supply from an external power source; an electrical power outlet configured to output an electrical power supply to a socket module; a control signal generator configured to generate a digital control signal; and a communications interface configured to transmit the digital control signal to the socket module.

In accordance with a third aspect of the invention, there is provided a socket module of an electric vehicle charging system, the socket module comprising: an electrical power inlet configured to receive electrical power from an electrical power outlet of the control module; an electrical power outlet configured to output electrical power to an electric vehicle (EV); a first communications interface configured to receive the digital control signal from a communications interface of the control module; a signal converter configured to convert the received digital control signal to a PWM control signal; and a second communications interface configured to output the PWM control signal to the EV.

### Brief Description of the Drawings

So that the invention can be fully understood, the following drawings are included in which:
Figure 1 is a schematic block diagram illustrating operation of a conventional EVSE known in the art;
Figure 2 is a schematic block diagram illustrating operation of an EVSE in accordance with an embodiment of the invention;
Figure 3 is an isometric view of a socket module in accordance with an embodiment of the invention; and
Figure 4 is an isometric view of a control module in accordance with an embodiment of the invention.

### Detailed Description

Embodiments of the invention described herein relate to an EVSE system comprising a control module and a socket module which may be provided in separate housings and may be separated without diminution in control signals communicated between the control module and the socket module. As such, upstream protection components, high temperature resistant power components and a digital control signal generator may be provided in a first enclosure and components responsible for generating the control signal as a pulse width modulated (PWM) control signal and the outlet to the vehicle may be provided in a second enclosure. Because the high temperature resistant power components can be provided in a separate enclosure from the socket module, the housing containing the socket module which is provided close to the desired charging point of the EV can be more compact than prior housings that also contain the high temperature resistant components and upstream protection (such as an RCD). Communication of control signals between the control module and the socket module can be performed digitally such that the control signals are not susceptible to the interference encountered by conventional control signals. The digital control signal may be encrypted at the control module prior to communication to the socket module. The digital control signal may be decrypted at the socket module. Encryption of the digital control signal provides an advantageous security feature.

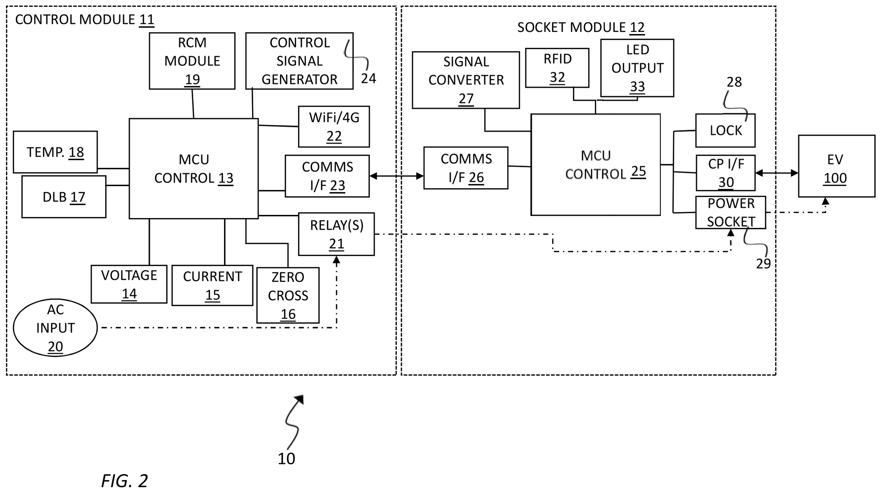

Figure 2 is a schematic block diagram illustrating an electric vehicle (EV) system 10 in accordance with an embodiment of the invention. The EV charging system 10 comprises a control module 11 and a socket module 12.

The control module 11 comprises a microcontroller unit (MCU) 13 configured to control various components of the control module 11. The control module 11 comprises one or more power sensors such as voltage detection unit 14, current detection unit 15 and zero-cross detection unit 16. The one or more power sensors form an AC electrical power supply monitoring unit configured to monitor at least one parameter of the AC electrical power supply being received from the mains supply and/or being output to the socket module.

The control module 11 may comprise a dynamic load balancing (DLB) dynamic load sampling unit 17. The control module 11 may comprise a temperature sensor 18. The temperature sensor 18 is configured to determine a temperature of the EV charging system 10.

The control module 11 may comprise a residual current monitoring (RCM) module 19 which may include a residual current device (RCD). The control module 11 comprises an alternating current (AC) electrical power inlet 20. The control module 11 comprises an AC electrical power outlet to output electrical power from the control module 11 to the socket module 12. The AC electrical power outlet may take the form of one or more relays 21.

The control module 11 comprises a wireless communications module 22. The wireless communication module 22 may be a WiFi or cellular communication module configured to interact with a user device and/or with a remote server to allow the EVSE system 10 to access relevant information such as user account information, authorization information that may be necessary before commencing charging.

The control module 11 comprises a communication interface 23 for communicating with the socket module 12. The control module 11 comprises a digital control signal generator 24. The control signal generator may be configured to generate the digital control signal based on the at least one parameter of the AC electrical power supply determined by the one or more power sensors such as voltage detection unit 14, current detection unit 15 and/or zero-cross detection unit 16. The control signal generator 24 may be configured to generate the digital control signal based on the temperature of the EVSE 10 determined by the temperature sensor 18. The control module 11 may comprise an encryption unit to encrypt the digital control signal.

The socket module 12 comprises a microcontroller unit (MCU) 25. The EV socket module 12 comprises a communication interface 26 for communicating with the control module 11. The control module 11 may comprise a decryption unit to decrypt the digital control signal. The EV socket module 12 comprises a signal converter 27 configured to convert a digital control signal received from the control module 11 to an analog PWM control signal. The signal converter 27 may also be configured to convert an analog signal received from an EV 100 to a digital signal to be transmitted from the communication interface 26 of the socket module 12 to the communication interface 23 of the control module 12.

The socket module 12 comprises an electronic lock 28, a power socket 29 and control pilot (CP) interface module 30. The CP interface module 30 is configured to communicate PWM signals to the EV 100. The CP interface module 30 may also be configured to receive signals from the 100 EV. The communication between the CP interface module 30 and the EV 100 may be in accordance with suitable technical standards such as International Electrotechnical Commission (IEC) standard 61851. The EV socket module 12 may comprise a radio frequency identification (RFID) module 32 to allow contactless, encrypted data exchange with a user device. The RFID module 32 may allow user authentication and/or allow a user to make a contactless payment. The socket module 12 may comprise an LED board or display 33 to output information to a user.

The one or more power sensors of the control module 11 include, in this embodiment, voltage detection unit 14, current detection unit 15 and zero-cross detection unit 16 are configured to monitor the incoming AC power supply received at the AC inlet 20.

The control signal (or control pilot signal) is typically a low voltage Pulse Width Modulated (PWM) (for example DC 6-12V) control signal used to communicate information between the EVSE and the EV to allow safe and efficient charging of the EV. The control signal may be in accordance with a suitable technical standard such as IEC 61851. Various charging states of the EV may be indicated by alternating between two different voltages, as shown in Table 1.

**Table 1**

| | | |
|---|---|---|
| +12 V | State A | No EV connected to the EVSE |
| +9 V | State B | EV connected to the EVSE, but not ready for charging |
| +6 V | State C | Connected and ready for charging, ventilation is not required |
| +3 V | State D | Connected, ready for charging and ventilation is required |
| +0 V | State E | Electrical short to earth on the controller of the EVSE, no power supply |
| -12 V | State F | EVSE is unavailable |

Furthermore, the EVSE may specify the maximum charging current for the EV via the duty cycle of the control signal, as shown in Table 2. Again, the maximum specified charging current may be defined in accordance with a technical standard such as IEC 61851.

**Table 2**

| Duty cycle < 3 % | No charging allowed |
|---|---|
| 3 % ≤ duty cycle ≤ 7 % | Force high-level communication protocol according to ISO 15118 or DIN 70121 |
| 7 % < duty cycle< 8 % | No charging allowed |
| 8 % ≤ duty cycle< 10 % | Max. current consumption for AC charging is 6 A |
| 10 % ≤ duty cycle ≤ 85 % | Available current = duty cycle × 0.6 A |
| 85 % < duty cycle ≤ 96 % | Available current = (duty cycle - 64) × 2.5 A |
| 96 % < duty cycle ≤ 97 % | Max. current consumption for AC charging is 80 A |
| Duty cycle > 97 % | No charging allowed |

In embodiments of the invention, control data may be generated as a digital control signal or as an analog signal which is then converted, by an analog-to-digital converter (not shown), to a digital control signal prior to transmission to the socket module 12. The digital control signal is then transmitted, via the communication interface 23 of the control module 11, to the communication interface 26 of the socket module 12. By using digital communication between the control module 11 and the socket module 12, the control signal can be encrypted thus providing enhanced data security.

The digital control signal is converted, by the signal converter 27 of the socket module 12, to an analog PWM control signal. The PWM control signal is then transmitted, via the CP interface module 30, to the electric vehicle 100.

Communication of the digital control signal between the communication interface 23 of the control module 11 and the communication interface 26 of the socket module 12 may be via a wired communication pathway such as an RJ45 communication protocol. Such a connection allows for digital signal communication and a 12V DC power supply. Such a connection allows digital control signals to be communicated between the control module 11 and the socket module 12 as well as providing a DC power supply to power electrical components of the socket module 12.

In embodiments where DC power is supplied to the socket module 12, the control module may be provided with an AC-DC PSU (not shown) to convert a portion of the AC power received at the AC power inlet 20 to a DC power to be provided to the socket module 12.

In alternative embodiments, the digital control signals may be transmitted wirelessly via suitable wireless communication protocol known in the art. In such embodiments, the components of the socket module 12 may be powered by a separate battery or mains power source.

An electrical power cable may be provided between the electrical power outlet of the control module 11 and an electrical power inlet of the socket module such as the power socket 29. The electrical power cable may be any suitable power cable known in the art satisfying safety requirements for EVSEs. The power socket 29 may be any suitable EV socket for the mode of EVSE. For example, in a mode 3 EVSE, the power socket 29 may be a socket satisfying the technical standard for a mode 3 EVSE. The power socket 29 is configured to receive an EV charging cable (not shown) to connect the power socket 29 with an EV 100 to be charged. The power socket 29 and the CP interface 30 may be integrated to form a single socket between the socket module 12 and the EV 100.

In use, AC power is received at the AC input 20 of the control module 20 from an external power source such as a mains power source. The AC power supply is provided to one or more relays 21. The one or more relays 21 are controlled by the MCU controller 13. AC power is output to the power socket 29 of the socket module 12. AC power may then be provided from the power socket 29 to the EV via a suitable power cable.

The EV 100 may comprise an AC-DC converter (not shown), a battery (not shown) and control circuitry (not shown). The EV 100 is configured to read the control signal received from the CP interface 30 and to determine the maximum charging current that the EV 100 may draw. The EV 100 may also be configured to indicate its charging state to the EVSE 10.

The AC-DC converter of the EV 100 converts the received AC power supply to DC power which is used to charge the battery of the EV 100. Alternatively, the EVSE may be provided with an AC-DC converter so that DC power is supplied from the EVSE to the EV.

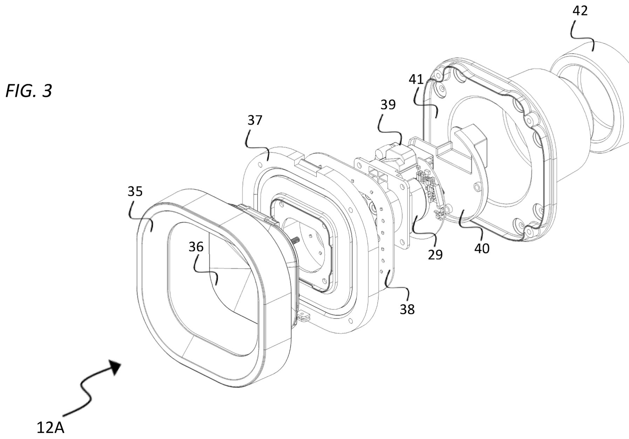

Figure 3 shows a disassembled socket module enclosure 12A in accordance with an embodiment of the invention. The socket module enclosure 12A comprises an external housing 35, an EV socket door 36, an EV socket mid-body housing 37, LED indicator printed circuit board (PCB) 38, EV outlet PCB 39 and EV socket 29, cover 40 for the EV outlet PCB 39, an in-wall housing 41 and cavity insulation 42. The socket module enclosure 12A shown in Figure 3 houses the components of the socket module 12 described above with reference to Figure 2.

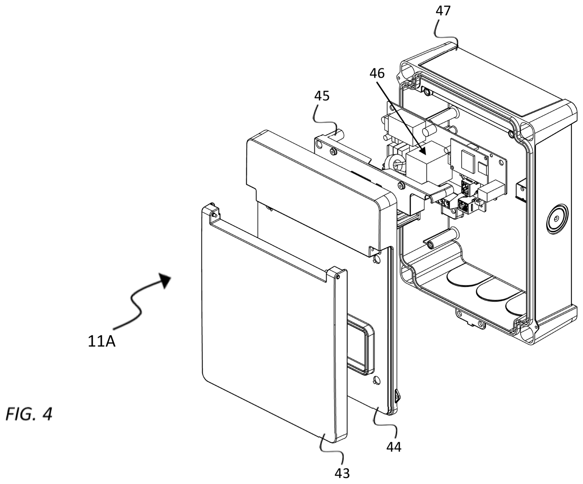

Figure 4 shows a disassembled control module enclosure 11A in in accordance with an embodiment of the invention. The control module enclosure 11A comprises an enclosure door 43, a front housing 44, a cover 45 for a control module PCB 46 and rear housing 47. The control module enclosure 11A shown in Figure 4 houses the components of the control module 11 described above with reference to Figure 2. In operation, the control module enclosure 11A is connected to the socket module enclosure 12A via a wired connection to allow communication of digital control signals between the control module 11 and the socket module 12. A power cable is also provided (not shown) between the control module enclosure 11A and the socket module enclosure 12A. The power cable can be any type of suitable power cable known in the art that is compliant with the relevant technical standard for EVSEs.

In its assembled state, the socket module enclosure 12A can fit within a wall cavity while the control module enclosure 11A can be provided in a separate part of the premises in which the EV charging system 10 is installed.

By separating components of the EV charging system 10 into separate enclosures, the amount of thermal generation can be reduced compared with prior, single-enclosure approaches. The communication of digital control signals between the separate enclosures allows for secure and encrypted communication between the enclosures. Furthermore, the power cable connecting the control module 11 and the socket module 12 can be non-energized when the EV charging system 10 is not in use. Because the control module enclosure 11A and the socket module enclosure 12A can be separated by several hundred metres, the environment around the socket module 11A is therefore non-energized when the EV charging system 10 is not in use, thereby providing an improvement in safety.

While embodiments described herein may relate to mode 3 EVSEs, it should be borne in mind that other modes of EVSEs may be used in alternative embodiments.

While various embodiments have been described, it should be understood that that various modifications may be made thereto without departing from the scope of the invention which is defined by the appended claims.

## Claims

1. An electric vehicle (EV) charging system comprising a control module and a socket module, the control module comprising:
a first electrical power inlet configured to receive an electrical power supply from an external power source;
a first electrical power outlet configured to output an electrical power supply to the socket module;
a control signal generator configured to generate a digital control signal;
and
a first communications interface configured to transmit the digital control signal to the socket module,
the socket module comprising:
a second electrical power inlet configured to receive electrical power from the first electrical power outlet of the control module;
a second electrical power outlet configured to output electrical power to an electric vehicle (EV);
a second communications interface configured to receive the digital control signal from the first communications interface of the control module;
a signal converter configured to convert the received digital control signal to a PWM control signal; and
a third communications interface configured to output the PWM control signal to the EV.

2. The EV charging system of claim 1, wherein:
the third communications interface is configured to receive an analog feedback signal from the EV;
the signal converter is configured to convert the received analog feedback signal to a digital feedback signal;
the second communications interface is configured to send the digital feedback signal to the first communications interface of the control module; and
the first communications interface of the control module is configured to receive the digital feedback signal from the second communications interface.

3. The EV charging system of any preceding claim, wherein the first communications interface and the second communications interface are connected via a wired connection.

4. The EV charging system of claim 3, wherein the wired connection is configured to support digital signal transmission and DC electrical power transmission.

5. The EV charging system of any preceding claim, wherein the control module further comprises a residual current monitoring (RCM) module.

6. The EV charging system of any preceding claim, wherein the AC electrical power outlet of the control module comprises an electrical relay.

7. The EV charging system of any preceding claim, wherein the control module comprises an AC electrical power supply monitoring unit configured to monitor at least one parameter of the AC electrical power supply being received from the mains supply and/or being output to the socket module, wherein the control signal generator is configured to generate the digital control signal based on the at least one parameter of the AC electrical power supply.

8. The EV charging system of any preceding claim, wherein the control module comprises a temperature monitoring unit configured to determine a temperature of the EV charging system, wherein the control signal generator is configured to generate the digital control signal based on the determined temperature.

9. The EV charging system of any preceding claim, wherein the control signal generator is configured to generate the digital control signal based on charging status information received from the EV.

10. The EV charging system of any preceding claim, wherein the control module is contained in a first enclosure and the charging module is contained in a second enclosure.

11. The EV charging system of claim 10, wherein the first enclosure contains a residual current device.

12. A control module of an electric vehicle charging system, the control module comprising:
an electrical power inlet configured to receive an electrical power supply from an external power source;
an electrical power outlet configured to output an electrical power supply to a socket module;
a control signal generator configured to generate a digital control signal; and
a communications interface configured to transmit the digital control signal to the socket module.

13. A socket module of an electric vehicle charging system, the socket module comprising:
an electrical power inlet configured to receive electrical power from an electrical power outlet of the control module;
an electrical power outlet configured to output electrical power to an electric vehicle (EV);
a first communications interface configured to receive the digital control signal from a communications interface of the control module;
a signal converter configured to convert the received digital control signal to a PWM control signal; and
a second communications interface configured to output the PWM control signal to the EV.
